# EUROPEAN PATENT APPLICATION

(11) **EP 4 691 753 A1**
(43) Date of publication of application: **11.02.2026**
(21) Application number: 24780058.4
(22) Date of filing: 22.03.2024
(51) Int. Cl.: B32B 3/12, B32B 27/00, B64C 1/00

(54) **HOLLOW STRUCTURE BODY AND METHOD FOR MANUFACTURING HOLLOW STRUCTURE BODY**

(30) Priority: 31.03.2023 JP 2023059049
(71) Applicant: IHI Corporation, Tokyo 135-8710 (JP); Gifu Plastic Industry Co., Ltd., Gifu-shi, Gifu-ken 500-8721 (JP)
(72) Inventor: KAGAYA, Ryo, Tokyo 135-8710 (JP); HOJO, Masahiro, Chofu-shi, Tokyo 182-8522 (JP); SHIBAGAKI, Shingo, Gifu-shi, Gifu 500-8721 (JP)
(74) Representative: Kraus & Lederer PartGmbB
(86) International application number: PCT/JP2024/011460
(87) International publication number: WO 2024/203940

(57) **Abstract**

A hollow structure (10) includes a hollow plate (11) made of thermoplastic resin in which cells are arranged and a mounting member (30) configured to be securely mounted to an inner wall (4) of a jet engine for an aircraft. The hollow plate (11) includes a core layer (20) having side walls to define cells, a first skin layer (24) laminated on a first main surface of the core layer (20), and a second skin layer (25) laminated on a second main surface of the core layer (20). The mounting member (30) includes a columnar body (31) extending in the thickness direction of the hollow plate (11). A side surface of the body (31) is welded to the side wall of the core layer (20). The body (31) is not exposed from an outer surface of the first skin layer (24).

## Description

### TECHNICAL FIELD

The present disclosure relates to a hollow structure and a method for manufacturing a hollow structure.

### BACKGROUND

From the viewpoints of weight reduction, improvement in fuel efficiency, and other factors, structures made of resin materials are known for use in aircraft, automobiles, and other vehicles. In one instance, a structure made of a resin material is mounted to a mounting target using a mounting member. In another instance, multiple structures formed of resin materials are joined to each other using a joining member, and the joined structures are mounted to the mounting target.

Patent Literature 1 discloses a method for joining two thin plate-shaped structures to each other using a joining member. At least one of the two structures is made of fiber-reinforced plastic. The joining member includes a truncated cone-shaped shaft and a head. The head is located at one end of the shaft and has a diameter larger than that of the shaft. With the two structures overlapped with each other, the end of the joining member closer to the shaft is pressed against the surface of one of the structures and then rotated, so that the resin in the fiber-reinforced plastic is thermally fused and joined to the joining member. This enables the two structures to be coupled to each other by the joining member.

### CITATION LIST

### Patent Literature

Patent Literature 1: JP6580060B2

### SUMMARY OF INVENTION

### Technical Problem

In the joining member disclosed in Patent Literature 1, the shaft has a length greater than or equal to the combined thickness of the two structures. As a result, in the two joined structures, the head of the joining member protrudes from one surface, and the end of the shaft of the joining member protrudes from the other surface. Thus, if a structure joined by such a joining member is mounted to the inner wall of a jet engine by means of the joining member, the protruding portion of the joining member may disturb the airflow in the air passage of the jet engine.

### Solution to Problem

A hollow structure according to an aspect of the present disclosure is configured to be securely mounted to an inner wall of a jet engine for an aircraft. The inner wall is a mounting target. The hollow structure includes a hollow plate made of thermoplastic resin in which cells are arranged and a mounting member configured to be securely mounted to the inner wall. The hollow plate includes a core layer having multiple side walls that extend in a thickness direction of the hollow plate to define the cells, a first skin layer laminated on a first main surface of the core layer, and a second skin layer laminated on a second main surface of the core layer. The mounting member includes a columnar body extending in the thickness direction of the hollow plate. A side surface of the body is welded to the side walls of the core layer. The body is not exposed from an outer surface of the first skin layer.

In this configuration, the mounting member is not exposed from the first skin layer of the hollow plate. Accordingly, the surface of the hollow structure on the side where the first skin layer is located does not have irregularities that would be formed by the mounting member. Thus, the surface of the hollow plate on the side where the first skin layer is located is flat. When the hollow structure is mounted to the inner wall of the jet engine such that the first skin layer faces the air passage of the jet engine, the turbulence of air flow in the jet engine is suppressed. Further, since the body of the mounting member is welded to the side walls of the core layer, the mounting member is firmly fixed to the hollow plate. When the hollow structure is mounted to the inner wall of the jet engine using the mounting member, the hollow structure is stably mounted.

In the above-described configuration, it is preferred that the body include an edge welded to an inner surface of the first skin layer.

In the above-described configuration, the body of the mounting member is welded not only to the side walls of the core layer but also to the first skin layer. This allows the mounting member to be fixed more firmly.

It is preferred that the body include an end having a flange protruding in a radial direction and the flange be welded to the second skin layer.

In the above-described configuration, not only the body of the mounting member but also the flange of the mounting member are welded to the second skin layer. This allows the mounting member to be fixed more firmly.

In the above-described configuration, it is preferred that the body include a mounting hole extending in an axial direction.

In the above-described configuration, for example, when a screw is employed as a fixing member used to securely mount the hollow structure to the inner wall of the jet engine for the aircraft, insertion of the screw into the mounting hole is facilitated. This facilitates the mounting of the hollow structure to the inner wall of the jet engine.

In a method for manufacturing a hollow structure according to an aspect of the present disclosure, the hollow structure includes a hollow plate made of thermoplastic resin in which cells are arranged and a columnar mounting member configured to be securely mounted to an inner wall of a jet engine. The method includes a welding step that welds the mounting member inside the hollow plate by frictional heat generated between the hollow plate and the mounting member by moving the mounting member from a first main surface toward a second main surface of the hollow plate while generating relative rotation between the hollow plate and the mounting member. In the welding step, the mounting member is moved within a range in which the mounting member is not exposed from the second main surface.

In the above-described configuration, in the welding step, the hollow plate made of thermoplastic resin is thermally fused by frictional heat generated by relative rotation between the hollow plate and the mounting member, so that the mounting member is welded inside of the hollow plate. Thus, a hollow structure in which the mounting member is firmly fixed to the hollow plate is obtained. This allows the hollow structure to be stably mounted to the inner wall of the jet engine. Further, in the welding step, the mounting member is moved to a position where the mounting member is not exposed from the second main surface of the hollow plate, and is then thermally welded. Thus, a hollow structure having a flat second main surface is obtained. When the second main surface of the hollow structure is mounted to face the air passage of the jet engine, the turbulence of air flow in the jet engine is suppressed.

### Advantageous Effects of Invention

The present disclosure provides a hollow structure that suppresses the turbulence of air flow when mounted to the inner wall of the jet engine.

### BRIEF DESCRIPTION OF DRAWINGS

[Fig. 1] A diagram illustrating the configuration of a jet engine for an aircraft.
[Fig. 2] A cross-sectional view of the hollow structure mounted to a nacelle that forms an inner wall of the jet engine.
[Fig. 3] A partial perspective view of the hollow structure.
[Fig. 4] A partial perspective view of the mounting member.
[Fig. 5] A cross-sectional view of the mounting member.
[Fig. 6] A perspective view of the hollow plate.
[Fig. 7] A cross-sectional view taken along line β-β in Fig. 6.
[Fig. 8] A cross-sectional view taken along line γ-γ in Fig. 6.
[Fig. 9] A diagram illustrating a method for manufacturing the hollow plate.
[Fig. 10] A diagram illustrating a method for manufacturing the hollow structure.
[Fig. 11] A diagram illustrating a welded state of the mounting member.
[Fig. 12] A cross-sectional view of the hollow structure according to a modification.
[Fig. 13] A cross-sectional view of the mounting member according to a modification.
[Fig. 14] A cross-sectional view of the hollow structure according to a modification.
[Fig. 15] A cross-sectional view of the hollow structure according to a modification.
[Fig. 16] A cross-sectional view of the hollow structure according to a modification.
[Fig. 17] A cross-sectional view of the hollow structure according to a modification.
[Fig. 18] A cross-sectional view of the mounting member according to a modification.

### DESCRIPTION OF EMBODIMENTS

A hollow structure 10 according to an embodiment of the present invention will now be described.

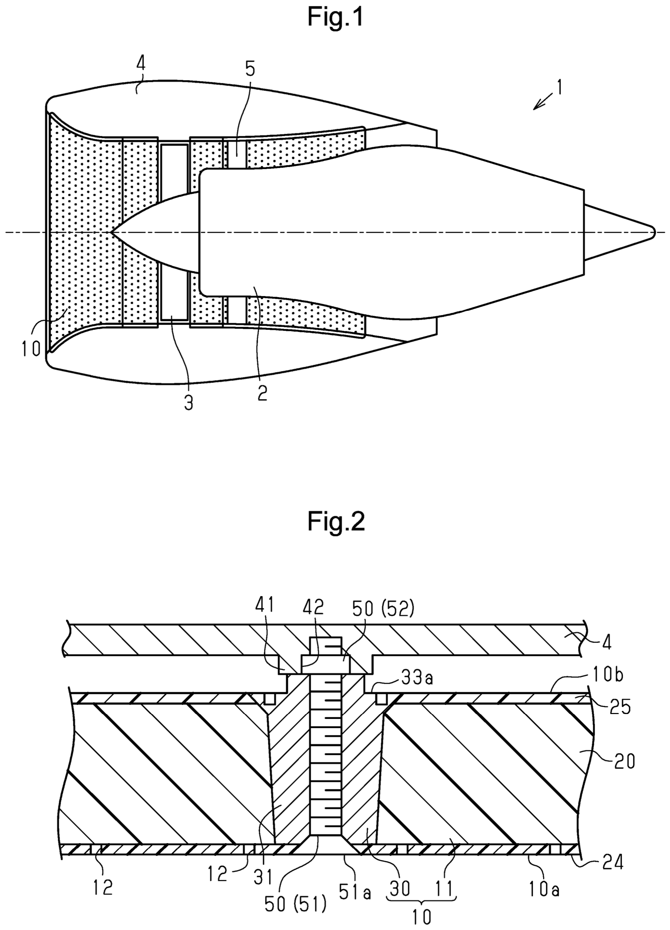

Referring to Fig. 1, a jet engine 1 for an aircraft utilizes air as a working fluid to obtain thrust by drawing in air from the front and discharging it toward the rear. In the jet engine 1, a fan 3 is arranged in front of an engine 2 that includes a compression chamber, a combustion chamber, and a turbine. The engine 2 is accommodated in a nacelle 4. The air drawn from the front of the jet engine 1 is compressed by the fan 3. Part of the compressed air flows through a structural guide vane 5 located between the nacelle 4 and the engine 2 into an air passage. The air is then discharged rearward and used as thrust for the aircraft. The remaining air is drawn into the engine 2 and compressed in the compression chamber. Further, the air is combusted in the combustion chamber to drive the turbine, which is a drive source for the fan 3.

In such a jet engine 1, a sound-absorbing panel is mounted to face the air passage in order to absorb noise generated in the air passage and noise generated by aerodynamic interference between the fan 3 and the structural guide vane 5. In Fig. 1, for example, a hollow structure 10 is mounted, as a sound-absorbing panel having excellent sound-absorbing performance, to the nacelle 4 forming an inner wall of the housing of the jet engine 1. In Fig. 1, in order to clearly show the mounting position of the hollow structure 10, the jet engine 1 is illustrated in a sectional view such that its internal air passage is visible.

As shown in Fig. 2, the hollow structure 10 is securely mounted to the nacelle 4, which is the inner wall of the jet engine 1 serving as a mounting target, by a fixing member 50. The hollow structure 10 is mounted to the nacelle 4 such that one main surface 10a faces the air flow passage of the jet engine 1 while the other main surface 10b faces the inner surface of the nacelle 4.

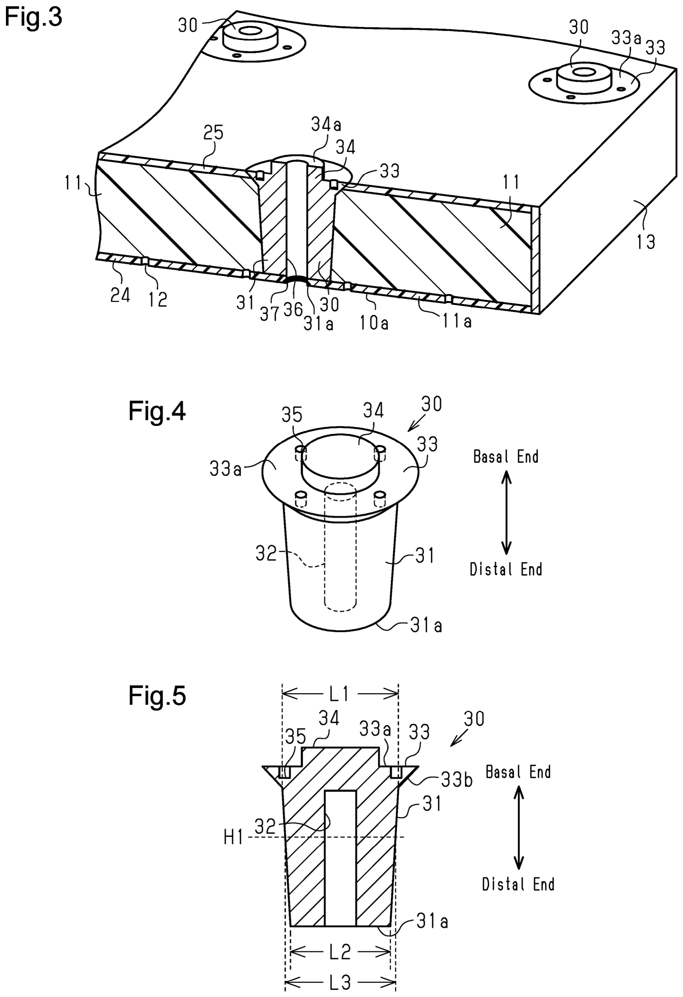

As shown in Figs. 2 and 3, the hollow structure 10 includes a hollow plate 11 and a mounting member 30. The hollow plate 11 and the mounting member 30 are made of a known thermoplastic resin material. The mounting member 30 is fixed inside the hollow plate 11 by thermal welding. Multiple mounting members 30 are fixed to the hollow plate 11 at intervals.

As shown in Fig. 2, the fixing member 50 of the present embodiment includes a countersunk screw 51 and a nut 52 that is threaded onto the distal end of the countersunk screw 51. Mounting seats 41 used to securely mount the hollow structure 10 are arranged on the inner circumferential surface of the nacelle 4. Each mounting seat 41 includes a recess 42. The hollow structure 10 is mounted to the nacelle 4 by threading the countersunk screw 51 mounted via the mounting member 30 onto the nut 52 fitted in the recess 42.

First, the hollow plate 11 and the mounting member 30 of the hollow structure 10 will be described.

### <Hollow Plate 11>

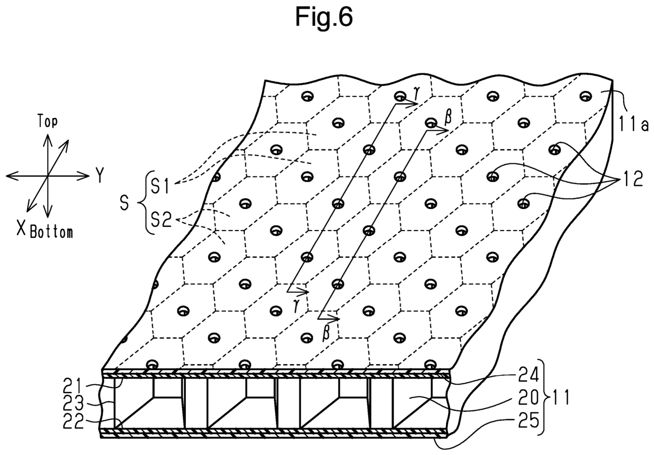

The configuration of the hollow plate 11 and the method for manufacturing the hollow plate 11 will now be described with reference to Figs. 6 to 9. To facilitate understanding, the vertical direction of the hollow plate 11 is defined in accordance with the top and bottom as shown in Figs. 6 to 8.

As shown in Fig. 6, the hollow plate 11 includes a core layer 20 in which cells S are arranged. Further, the hollow plate 11 includes first and second sheet-shaped skin layers 24 and 25 that are joined to respective opposite surfaces of the core layer 20 in the thickness direction. The core layer 20 is formed by folding a single first sheet member 100, which is made of thermoplastic resin and molded into a predetermined shape. The core layer 20 includes upper walls 21, lower walls 22, and side walls 23 extending between the upper and lower walls 21 and 22 to define the cells S in a hexagonal cylindrical shape.

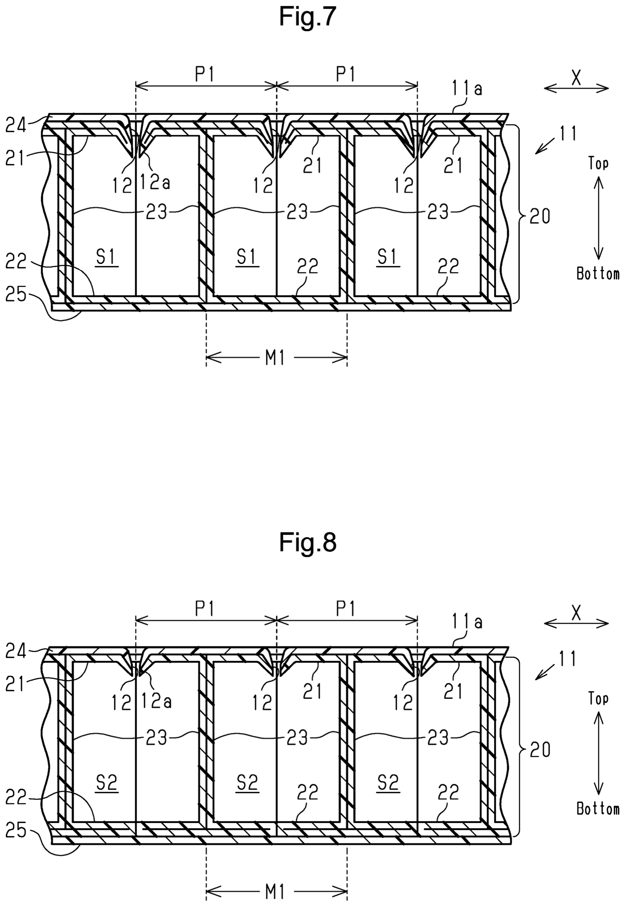

As shown in Figs. 7 and 8, the cells S defined inside the core layer 20 include first cells S1 and second cells S2 having different configurations from each other. As shown in Fig. 7, in each first cell S1, a two-layer upper wall 21 is provided at upper parts of the side walls 23. The layers of the two-layer upper wall 21 are joined to each other. In the first cell S1, a single-layer lower wall 22 is provided at lower parts of the side walls 23. As shown in Fig. 8, in each second cell S2, a single-layer upper wall 21 is provided at upper parts of the side walls 23. In the first cell S1, a two-layer lower wall 22 is provided at lower parts of the side walls 23. The layers of the two-layer lower wall 22 are joined to each other. As shown in Figs. 7 and 8, adjacent ones of the first cells S1 and adjacent ones of the second cells S2 are partitioned by the two-layer side walls 23.

As shown in Fig. 6, the first cells S1 are arranged to form a row in a X-direction, and two adjacent first cells S1 share one side of a hexagon as viewed from above. Similarly, the second cells S2 are arranged to form a row in the X-direction, and two adjacent second cells S2 share one side of a hexagon as viewed from above. The rows of the first cells S1 and the rows of the second cells S2 are alternately arranged in a Y-direction, which is orthogonal to the X-direction. With these first cells S1 and second cells S2, the entire core layer 20 has a honeycomb structure. In Fig. 6, the configurations of the two-layer upper and lower walls 21 and 22 are not shown.

As shown in Figs. 6 to 8, the first skin layer 24, which is a sheet member made of thermoplastic resin, is joined to the upper surface, which is a first main surface, of the core layer 20. The second skin layer 25, which is a sheet member made of thermoplastic resin, is joined to the lower surface, which is a second main surface, of the core layer 20. In this embodiment, the upper parts of the side walls 23 of the core layer 20 are closed by the upper walls 21 of the core layer 20 and the first skin layer 24. Similarly, the lower parts of the side walls 23 of the core layer 20 are closed by the lower walls 22 of the core layer 20 and the second skin layer 25.

As shown in Figs. 6 to 8, the hollow plate 11 includes a main surface 11a, which is the surface of the first skin layer 24, and the main surface 11a includes connection holes 12, each connecting the inside and the outside of the corresponding cell S to each other. Specifically, as shown in Fig. 7, the connection hole 12 in each first cell S1 extends through the first skin layer 24 and the two-layer upper wall 21. Further, as shown in Fig. 8, the connection hole 12 in each second cell S2 extends through the first skin layer 24 and the two-layer upper wall 21.

As shown in Fig. 6, one connection hole 12 is provided for each cell S. In this embodiment, one connection hole 12 is located at the center of the hexagon defined by each cell S as the hollow plate 11 is viewed from above. As shown in Figs. 7 and 8, the diameter of the opening of each connection hole 12 is set to less than or equal to the length of one side of the hexagon defined by the cell S as viewed from above. Specifically, the diameter of the opening of each connection hole 12 is set to be a fraction of the interval P1 between the centers of adjacent cells S in the X-direction (for example, about 0.5 to about 3.0 mm). Further, each connection hole 12 includes an opening edge 12a positioned in the internal space of each cell S.

The thermoplastic resin material used for the core layer 20, the first skin layer 24, and the second skin layer 25 may be selected from known materials. From the viewpoints of excellent scratch resistance (wear resistance), impact resistance, heat resistance, low-temperature resistance, oil resistance, chemical resistance, and mechanical strength, a polyamide resin, particularly a nylon resin, is preferred. Examples of the nylon resin include nylon 6, nylon 11, nylon 12, nylon 66, nylon 610, nylon 6T, nylon 6I, nylon 9T, nylon M5T, and nylon 612. Among these nylon resins, nylon 6 is more preferred because it has appropriate elasticity (flexibility) and thus exhibits excellent scratch resistance and impact resistance.

The thermoplastic resin material may also be a polyamide-based elastomer resin obtained by blending an elastomer with the polyamide resin. Since the polyamide-based elastomer resin has excellent elasticity (flexibility), impact resistance can be further improved.

Alternatively, among the layers of the hollow plate 11, a polyamide-based elastomer resin may be used only for the first skin layer 24, which is arranged to face the inside of the air passage, and a polyamide resin without blended elastomer may be used for the core layer 20 and the second skin layer 25. This is preferred because it ensures impact resistance on the air passage while suitably maintaining the strength of the hollow structure 10.

From the viewpoint of ease of processing of the hollow plate 11, among nylon resins, those having a water absorption in the range of 0.5% to 1.0%, inclusive, are preferred, those having a water absorption in the range of 0.5% to 0.7%, inclusive, are more preferred, and those having a water absorption in the range of 0.5% to 0.6%, inclusive, are still more preferred. By keeping the water absorption within this range, foaming of the nylon resin due to absorption of moisture in the air is suppressed during a molding step or storage of the hollow structure 10 or when the hollow structure 10 is subjected to, for example, bending.

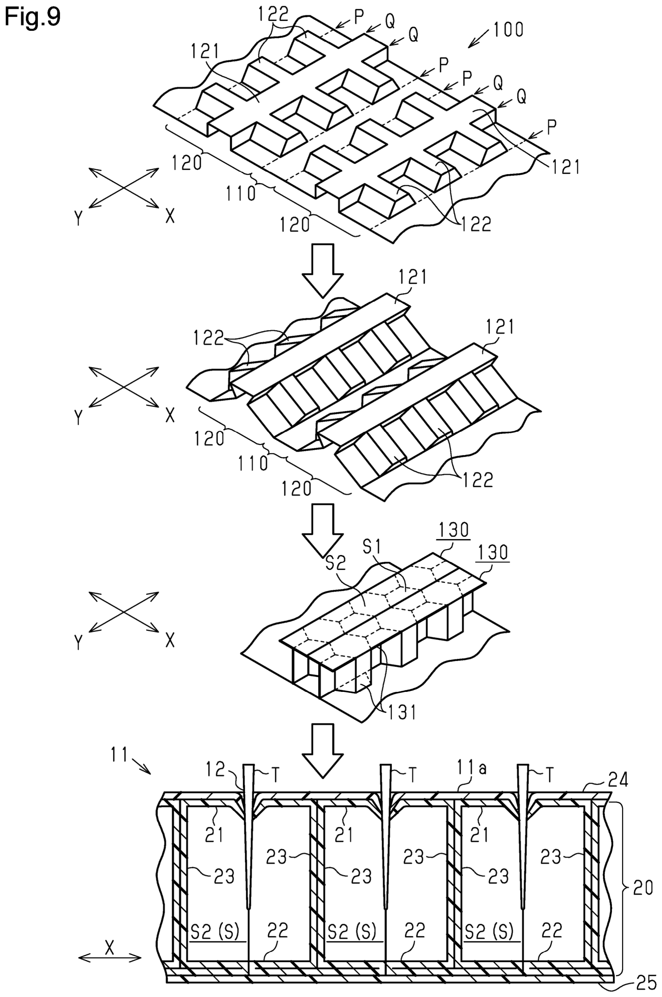

The method for manufacturing the hollow plate 11 will now be described with reference to Fig. 9.

As shown in Fig. 9, the hollow plate 11 is formed by folding the first sheet member 100. The first sheet member 100 is formed by molding one thermoplastic resin sheet into a predetermined shape. The first sheet member 100 includes belt-shaped flat surface regions 110 and bulged regions 120 that are alternately arranged in the longitudinal direction (X-direction) of the first sheet member 100. Each bulged region 120 includes a first bulged portion 121 having a downwardly grooved cross-section composed of an upper surface and two side surfaces. The first bulged portion 121 extends over the entire length of the bulged region 120 in its extending direction (Y-direction). The angle between the upper surface and each side surface of the first bulged portion 121 is preferably 90 degrees. This causes the first bulged portion 121 to have a channel-shaped cross-section opening downward. The width of the first bulged portion 121 (i.e., the transverse length of the upper surface) is equal to the width of the flat surface region 110 and twice as long as the bulging height of the first bulged portion 121 (i.e., the transverse length of the side surface).

Additionally, the bulged region 120 includes second bulged portions 122 that are orthogonal to the first bulged portion 121. Each second bulged portion 122 has a trapezoidal cross-section, which is obtained by halving a regular hexagon at the longest diagonal line. The bulging height of each second bulged portion 122 is set to be equal to the bulging height of the first bulged portion 121. The interval between adjacent second bulged portions 122 is equal to the width of the upper surface of each second bulged portion 122.

The first bulged portion 121 and the second bulged portion 122 are formed by upwardly bulging part of the sheet using plasticity of the sheet. The first sheet member 100 may be formed from a single sheet by a known molding process such as vacuum molding or compression molding.

The core layer 20 is formed by folding the first sheet member 100 formed in the above-described manner along boundaries Ps and Qs. Specifically, the first sheet member 100 is valley-folded at boundaries Ps between the flat surface regions 110 and the bulged regions 120 and mountain-folded at boundaries Qs between the upper surfaces and side surfaces of the first bulged portions 121 to compress the first sheet member 100 in the X-direction. Then, the upper surfaces and the side surfaces of the first bulged portions 121 are folded over each other, and the end surfaces of the second bulged portions 122 and the flat surface regions 110 are folded over each other. This forms partitions 130, which are polygonal prisms extending in the Y-direction. A single partition 130 is formed for each bulged region 120. Such partitions 130 are repeatedly formed in the X-direction to form the core layer 20 having a hollow plate shape. In this embodiment, the direction in which the first sheet member 100 is compressed to be folded is the direction in which the cells S are arranged (i.e., the X-direction).

When the first sheet member 100 is compressed as described above, the upper wall 21 of the core layer 20 is formed by the upper surface and the side surface of the first bulged portion 121, and the lower wall 22 of the core layer 20 is formed by the end surface of the second bulged portion 122 and the flat surface region 110. The two-layer portion of the upper wall 21, in which the upper surface and the side surface of the first bulged portion 121 are folded over each other, and the two-layer portion of the lower wall 22, in which the end surface of the second bulged portion 122 and the flat surface region 110 are folded over each other, are overlapped portions 131.

Hexagonal regions defined by the folded second bulged portions 122 serve as the second cells S2, and hexagonal regions defined between two adjacent partitions 130 serve as the first cells S1. In the present embodiment, the upper surfaces and the side surfaces of the second bulged portions 122 form the side walls 23 of the second cells S2. Further, the side surfaces of the second bulged portions 122 and flat surface portions located between the second bulged portions 122 of the bulged region 120 form the side walls 23 of the first cells S1. The two-layer side walls 23 are formed by portions of the second bulged portions 122 where the upper surfaces are in contact with each other and portions of the bulged region 120 where the flat surface portions are in contact with each other. The upper part of each first cell S1 is closed by the two overlapped portions 131, and the lower part of each second cell S2 is closed by the two overlapped portions 131. When performing such a folding step, the first sheet member 100 is preferably heated and softened.

A second sheet member made of thermoplastic resin is joined to each of the upper and lower surfaces of the core layer 20, which are obtained in the above-described manner, by thermal welding. The second sheet member joined to the upper surface of the core layer 20 serves as the first skin layer 24 to close the cells S from above together with the upper walls 21 of the core layer 20. The second sheet member joined to the lower surface of the core layer 20 serves as the second skin layer 25 to close the cells S from below together with the lower walls 22 of the core layer 20.

When the second sheet members (i.e., the first skin layer 24 and the second skin layer 25) are thermally welded to the core layer 20, the two-layer upper walls 21 (i.e., the overlapped portions 131) of each first cell S1 are thermally welded to each other. Similarly, the two-layer lower walls 22 (i.e., the overlapped portions 131) of each second cell S2 are thermally welded to each other.

The above-described steps are performed to obtain the hollow plate 11, in which the first cells S1 or the second cells S2 are arranged in rows in the X-direction and a larger number of first cells S1 and second cells S2 are alternately arranged in the Y-direction.

Then, a large number of connection holes 12 are formed in the first skin layer 24 of the hollow plate 11 and the upper wall parts 21 of the core layer 20. Each connection hole 12 is formed by passing a piercing tool T (e.g., a drill, needle, or punch) through the main surface 11a of the hollow plate 11. Multiple piercing tools T are arranged at intervals that are substantially equal to the intervals between the centers of the adjacent cells S. The hollow plate 11 is arranged and fixed on the lower side of the piercing tools T to move the piercing tools T downward. In this manner, the main surface 11a of the hollow plate 11 has one connection hole 12 at each of the substantially central portions of the cell S. The above-described steps are performed to manufacture the hollow plate 11 including multiple connection holes 12.

### <Mounting Member 30>

As shown in Figs. 4 and 5, the entire mounting member 30 has a substantially cylindrical shape. To facilitate understanding, the distal and basal ends of the mounting member 30 are hereinafter defined as shown in Fig. 4. Additionally, the mounting member 30 is shown in its shape before being mounted to the hollow plate 11 for use as the hollow structure 10.

As shown in Figs. 4 and 5, a truncated cone-shaped body 31 having a slightly smaller diameter toward the distal end is provided on the distal side of the mounting member 30. The ratio of the diameter L1 of the body 31 at the basal edge to the diameter L2 of the distal surface 31a of the body 31 (i.e., L1/L2) is preferably about greater than 1 and less than or equal to 2, more preferably about 1.1 to 1.5, and still more preferably about 1.1 to 1.3. An L1/L2 ratio within this range allows a spin welding step (described later) to be performed more easily. Further, this configuration allows the mounting member 30 to be positioned with a relatively high accuracy, to be firmly welded to the side walls 23 of the core layer 20, and to maintain the strength of the hollow structure 10.

The angle formed between the distal surface 31a of the body 31 and the outer circumferential surface of the body 31 is preferably about greater than 90° and less than or equal to 135°, more preferably about greater than 90° and less than or equal to 110°, and still more preferably about greater than 90° and less than or equal to 100°.

The basal end of the body 31 includes a flange 33 protruding in the radial direction from the body 31. As shown in Fig. 5, the distal side surface of the flange 33 is formed as an inclined surface 33b that gradually decreases in diameter toward the distal end. The angle formed by a basal surface 33a and the inclined surface 33b of the flange 33 is preferably about 15° to 75°, more preferably about 25° to 65°, and still more preferably about 35° to 55°. When the angle between the basal surface 33a and the inclined surface 33b is within this range, the flange 33 enters the hollow plate 11 during the spin welding step more easily. thereby making the spin welding operation easier. Further, this configuration allows the mounting member 30 to be positioned with a relatively high accuracy, to be firmly welded to the side walls 23 of the core layer 20, and to maintain the strength of the hollow structure 10.

The thickness of the flange 33 is preferably about 0.5 to 5 times the thickness of the second skin layer 25. When the thickness of the flange 33 is within this range, the welding strength of the mounting member 30 is improved and firm welding between the flange 33 and the side walls 23 is achieved. As shown in Fig. 2, the flange 33 of the present embodiment is thicker than the second skin layer 25.

As shown in Fig. 5, a recess 32 having a circular cross-section and extending in the axial direction is provided at the center of the body 31. The recess 32 opens in the distal surface 31a of the body 31. The recess 32 extends to the distal edge of the flange 33.

As shown in Figs. 4 and 5, the basal surface 33a of the flange 33 includes four locking holes 35. The locking holes 35 are used to lock and fix a holder during spin welding, which will be described later. The locking holes 35 are thinned portions. This reduces the weight of the mounting member 30 while preventing a decrease in strength in the mounting member 30. The basal end of the mounting member 30 includes a head 34. The head 34 is cylindrical, and has a smaller diameter than the body 31.

As shown in Figs. 5, 7, and 8, the diameter L3 of the mounting member 30 at a height-direction center H1 is preferably about 1.0 to 1.5 times the distance M1 between two opposing side walls 23 in each cell S of the core layer 20, and more preferably about 1.1 to 1.3 times. When the diameter L3 is within this range, the strength required when the hollow structure 10 is mounted to the nacelle 4 is achieved.

### <Hollow Structure 10>

As shown in Fig. 3, the hollow structure 10 includes the hollow plate 11 and the mounting members 30, which are fixed inside the hollow plate 11 by thermal welding. The mounting members 30 are fixed such that the thickness direction of the hollow plate 11 and the axial direction of the body 31 coincide with each other. A sheet member 13, which is made of the same thermoplastic resin material as the second sheet members (i.e., the first skin layer 24 and the second skin layer 25), is welded to the side surface of the hollow plate 11, thereby sealing the side surface.

Each mounting member 30 is fixed to the hollow plate 11 such that the distal surface 31a of the body 31 is positioned closer to the main surface 11a of the hollow plate 11 and the head 34 is positioned closer to the main surface 11b of the hollow plate 11. That is, each mounting member 30 is fixed to the hollow plate 11 such that the distal surface 31a of the body 31 is positioned on the side where the connection holes 12 are provided in the hollow plate 11.

As shown in Figs. 2 and 3, the side surface of the body 31 of the mounting member 30 is welded to the side walls 23 of the core layer 20 of the hollow plate 11 along the side surfaces of the side walls 23. Further, the distal edge of the body 31 is welded to the inner surface of the first skin layer 24 so as not to be exposed from the first skin layer 24 of the hollow plate 11. Thus, the main surface 10a of the hollow structure 10 is flat. In addition, the flange 33 of the mounting member 30 is welded to the second skin layer 25, with the basal surface 33a flush with the outer surface of the second skin layer 25. That is, the basal surface 33a of the flange 33 is flush with the main surface 10b of the hollow plate 11. The head 34 of the mounting member 30 protrudes from the second skin layer 25 of the hollow plate 11. In Figs. 2 and 3, the upper wall 21, the lower wall 22, and the side wall 23 of the core layer 20 of the hollow plate 11 are not illustrated.

As shown in Fig. 3, the mounting member 30, which is mounted to the hollow plate 11 and forms part of the hollow structure 10, includes a mounting hole 36 having a circular cross-section that extends in the axial direction. The mounting hole 36 opens in the distal surface 31a of the body 31 and the basal surface 34a of the head 34. The end of the mounting hole 36 that opens in the distal surface 31a of the body 31 includes an accommodation portion 37. The accommodation portion 37 gradually increases in diameter toward the distal surface 31a.

Referring to Fig. 2, the countersunk screw 51 of the fixing member 50 is inserted into the mounting hole 36. The accommodation portion 37 accommodates the head 51a of the countersunk screw 51. The mounting hole 36 is formed by penetrating the recess 32 in the axial direction through a post-processing step, which is performed during manufacturing of the hollow structure 10.

In the hollow structure 10, in which the mounting member 30 is welded to the hollow plate 11, the main surface 11a of the hollow plate 11 serves as the main surface 10a of the hollow structure 10, and the main surface 11b of the hollow plate 11 serves as the main surface 10b of the hollow structure 10.

### <Method for Manufacturing Hollow Structure 10>

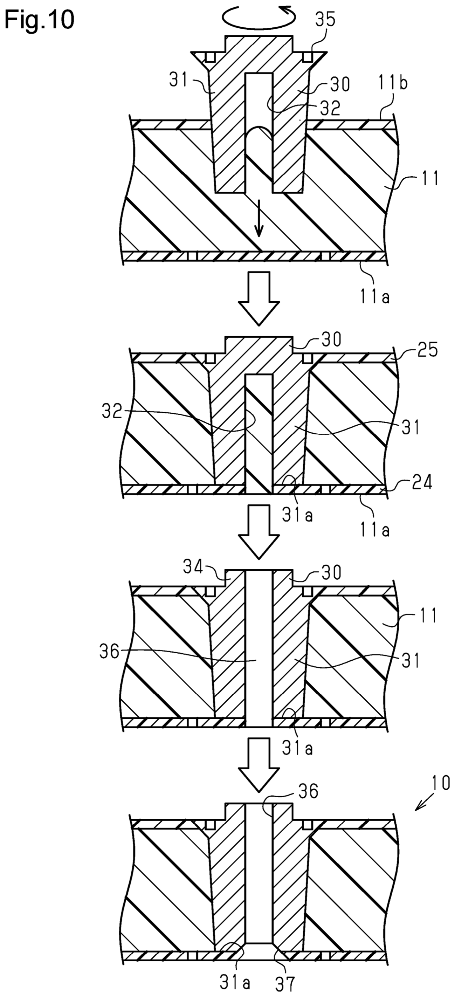

The method for manufacturing the hollow structure 10 will now be described with reference to Fig. 10. The process that manufactures the hollow structure 10 includes the spin welding step, which mounts the mounting member 30 to the hollow plate 11, and the post-processing step, which forms the mounting hole 36. In Fig. 10, the upper two figures illustrate the spin welding step, and the lower two figures illustrate the post-processing step.

First, a hollow plate 11 is cut into a predetermined shape and size.

As shown in Fig. 10, in the spin welding step, the cut hollow plate 11 is placed on the table of a spin welding machine with the main surface 11a facing downward. Then, a holder (not shown) of the spin welding machine is locked into each locking hole 35 of the mounting member 30, and the mounting member 30 is positioned to face the main surface 11b of the hollow plate 11. In the present embodiment, the main surface 11b is the first main surface, and the main surface 11a is the second main surface.

Subsequently, the mounting member 30 locked to the spin welding machine is moved downward so that the distal end of the body 31 of the mounting member 30 is brought into contact with the main surface 11b of the hollow plate 11. In this state, when the mounting member 30 is moved downward while being rotated at relatively high speed, frictional heat is generated between the hollow plate 11 and the mounting member 30. As a result, a portion of the hollow plate 11 around the mounting member 30 is thermally fused. Then, the body 31 of the mounting member 30 is inserted into the hollow plate 11 while thermally fusing the hollow plate 11.

The molten resin of the hollow plate 11 adheres to the side surface of the body 31 of the mounting member 30 to form a resin accumulation. Further, the molten resin enters the recess 32 from the distal surface 31a of the body 31. Furthermore, the molten resin pressed by the distal surface 31a of the body 31 forms a resin accumulation having an arcuate cross-section that bulges on the distal side of the distal surface 31a.

The mounting member 30 is moved downward within a range in which the distal end of the mounting member 30 is not exposed from the main surface 11a of the hollow plate 11. Specifically, the rotation and the downward movement of the mounting member 30 are stopped in a state in which the distal surface 31a of the body 31 of the mounting member 30 is in contact with the inner surface of the first skin layer 24 of the hollow plate 11. In this state, the resin accumulation having an arcuate cross-section on the distal side of the distal surface 31a remains within the range of the first skin layer 24. A greater amount of molten resin accumulates on the distal side of the distal surface 31a than on the outer surfaces of the flange 33 and the body 31 of the mounting member 30. As a result, the distal end of the body 31 of the mounting member 30 has a higher resin density than the other portions of the mounting member 30.

Subsequently, the holder of the spin welding machine is removed. Then, the hollow plate 11, to which the mounting member 30 has been mounted, is naturally cooled. As a result, the side surface of the body 31 of the mounting member 30 is welded to the side wall 23 of the core layer 20 of the hollow plate 11. The side surface of the body 31 is also welded to a resin accumulation that has been formed through thermal fusion of the hollow plate 11.

The distal edge of the body 31 of the mounting member 30 is welded to the inner surface of the first skin layer 24 of the hollow plate 11 such that the resin accumulation having an arcuate cross-section on the distal side of the body 31 remains within the thickness range of the first skin layer 24. The flange 33 of the mounting member 30 is welded to the second skin layer 25 in a state in which the basal surface 33a is flush with the outer surface of the second skin layer 25. Since the resin accumulation on the distal side of the body 31 is larger than that in the other portions, the mounting member 30 is more firmly welded on the distal side of the body 31.

In the spin welding step, the resin accumulation on the side surface of the body 31 of the mounting member 30 may not be formed, and the side surface of the body 31 may not be welded to the resin accumulation or may be only partially welded. Even in this case, since the resin accumulation having an arcuate cross-section is formed on the distal side of the body 31, the mounting member 30 is firmly fixed to the hollow plate 11.

The head 34 of the mounting member 30 protrudes from the second skin layer 25 of the hollow plate 11. The distal edge of the body 31 of the mounting member 30 is not exposed from the outer surface of the first skin layer 24. Further, the mounting member 30 is solidified by the molten resin that has entered the recess 32.

In the post-processing step, a piercing tool (not shown) having the same diameter as the recess 32 is inserted into the recess 32 filled with molten resin from the distal surface 31a of the body 31 of the mounting member 30. The piercing tool is moved in the axial direction of the mounting member 30 from the distal surface 31a toward the head 34 of the mounting member 30. As a result, the mounting hole 36 extending through the mounting member 30 in the axial direction is formed.

Further, the end of the mounting hole 36 opening in the distal surface 31a is counterbored to form the accommodation portion 37, which accommodates the head 51a of the countersunk screw 51 of the fixing member 50. In this manner, the hollow structure 10 is obtained through the welding step and the post-processing step.

To mount the hollow structure 10 to the inner wall of the jet engine 1, for example, a bending step may be performed subsequently to the post-processing step. In the bending step, the hollow structure 10 is bent in conformance with the shape of the portion of the inner wall where the hollow structure 10 is disposed. The bending is performed by sandwiching the hollow structure 10 between two heated plates conforming to the shape of the portion of the inner wall where the hollow structure 10 is disposed, thereby thermally deforming the hollow structure 10. The heating temperature for thermally deforming the hollow structure 10 is set to several degrees higher than the melting point of the thermoplastic resin forming the hollow plate 11. The heating time may be set to several to more than ten seconds so that the hollow structure 10 is not excessively heated for a relatively long period, which would otherwise cause melting.

### <Operation of the Hollow Structure 10>

The operation of the hollow structure 10 will now be described.

As shown in Fig. 2, when mounting the hollow structure 10 to the nacelle 4, which is the inner wall of the jet engine 1, the hollow structure 10 is disposed to face the nacelle 4 in a state in which the mounting seat 41 and the mounting member 30 are aligned with each other. In this state, the main surface 10a, on which the connection holes 12 are provided, is arranged to face the air flow passage of the jet engine 1, and the main surface 10b, on which the connection holes 12 are not provided, is arranged to face the inner surface of the nacelle 4.

Subsequently, the countersunk screw 51 is inserted into the mounting hole 36 of the mounting member 30 of the hollow structure 10, and is threaded onto the nut 52 fitted in the recess 42 of the mounting seat 41. The same applies to multiple mounting members 30 fixed to the hollow structure 10. As a result, the hollow structure 10 is mounted to the nacelle 4.

In the hollow structure 10 mounted to the nacelle 4, the distal edge of the mounting member 30 is not exposed from the main surface 10a facing the air flow passage. The mounting hole 36 of the mounting member 30 includes the accommodation portion 37, which accommodates the head 51a of the countersunk screw 51. Accordingly, the mounting member 30 and the fixing member 50 are flush with the main surface 10a facing the air flow passage. Thus, the main surface 10a is flat. This makes turbulence less likely to occur in the airflow passing through the jet engine 1.

When the spin welding step is performed, molten resin pressed by the mounting member 30 may form a slight bulge at a location relatively near the distal surface 31a of the mounting member 30 in the hollow structure 10. This slight bulge is small enough not to affect the airflow turbulence. The main surface 10a is regarded as flat even when such a slight bulge is present. Additionally, even when the head 51a of the countersunk screw 51 has a groove for tool rotation during mounting, the main surface 10a is regarded as flat if the area other than the groove is flat.

Since the mounting member 30 is fixed to the hollow plate 11 by spin welding, the molten resin of the core layer 20, the first skin layer 24, and the second skin layer 25 of the hollow plate 11 is welded to the mounting member 30. Since the mounting member 30 is firmly fixed inside the hollow plate 11, the hollow structure 10 is stably mounted by the fixing member 50.

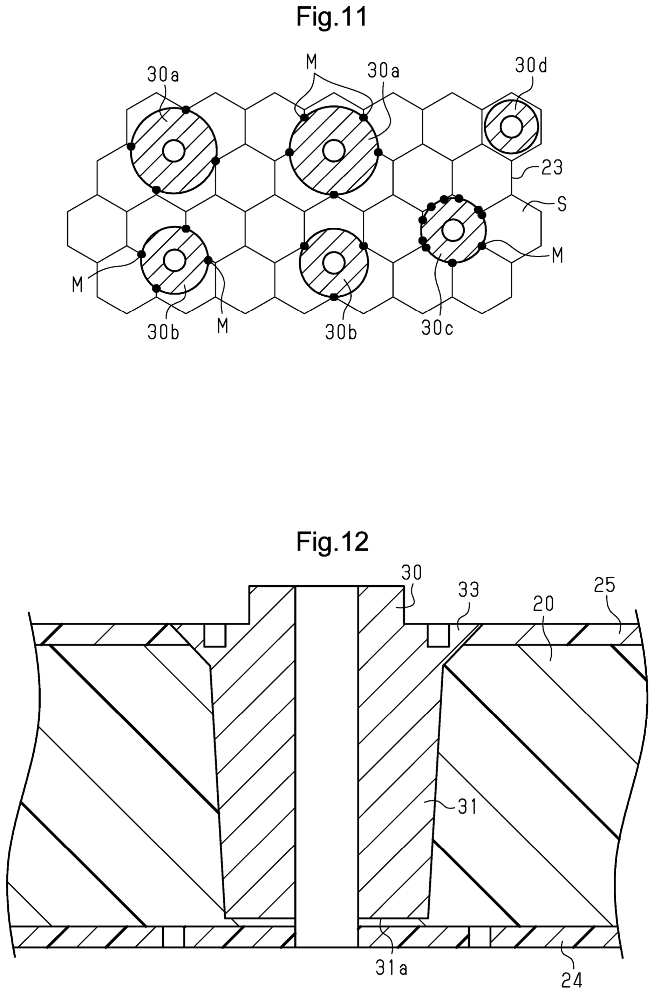

In the spin welding step, it is difficult to define the positional relationship between the hollow plate 11 and the mounting member 30 due to the nature of the step. Accordingly, as shown by mounting members 30a and 30b in Fig. 11, each mounting member 30 may be welded so as to span across multiple cells S. In Fig. 11, the thicknesses of the side walls 23 of the cell S are omitted to facilitate understanding of the positional relationship between the mounting member 30 and the cells S. Fig. 11 illustrates a state in which the mounting member 30 locked to the spin welding machine is moved downward and the distal end of the body 31 of the mounting member 30 is brought into contact with the main surface 11b of the hollow plate 11. Accordingly, the body 31 of the mounting member 30 is shown before being inserted into the hollow plate 11, with the side walls 23 of the cells S retaining their shape without being thermally fused.

When the mounting members 30a and 30b are used during the spin welding step, the distal surface 31a of the mounting member 30 is brought into contact with the side walls 23 of the core layer 20 at multiple positions to thermally fuse resin. That is, during the spin welding step, multiple welded portions M are formed between the mounting member 30 and the side walls 23 of the core layer 20. Then, as the mounting member 30 moves downward, the side walls 23 of the core layer 20 are thermally fused from the welded portions M.

As shown by a mounting member 30c in Fig. 11, welding may be performed at a position where the axis of a mounting member 30 coincides with the center of a cell S. In the present embodiment, the diameter L3 of the mounting member 30 at the height-direction center H1 is set to be approximately 1.0 to 1.5 times the distance M1 between two facing side walls 23 of the cell S of the core layer 20. As shown in Fig. 5, the body 31 has the shape of a truncated cone having a larger diameter toward the basal end. Thus, for example, even if the diameter L3 is 1.0 times the distance M1, the diameter is larger than the distance M1 in approximately half of the body 31 on the basal side. Thus, even when welding is performed at a position such as the mounting member 30c, multiple welded portions M are formed between the hollow structure 10 and the side walls 23, and sufficient strength required for the hollow structure 10 to be mounted to the nacelle 4 is achieved.

As shown in Fig. 11, if a mounting member 30d is positioned at the center of a cell S and the diameter L3 is less than 1.0 times the distance M1, no welded portion M between the mounting member 30d and the side wall 23 may be formed. In such a case, in order to ensure sufficient strength of the hollow structure 10, the area around the mounting member 30 needs to be filled with, for example, a potting agent. However, when the cells S are filled with the potting agent so as to be closed, the sound absorption efficiency decreases and the weight of the hollow structure 10 increases. This is not preferred as a component for an aircraft engine that requires relatively high sound absorption efficiency and weight reduction.

In the present embodiment, since the diameter L3 is set to be approximately 1.0 to 1.5 times the distance M1, the strength required when the hollow structure 10 is mounted to the nacelles 4 is obtained. Further, the range to be closed using a potting agent is limited. In particular, when the diameter L3 is approximately 1.1 to 1.3 times the distance M1, the range to be closed using a potting agent is minimized, while allowing the mounting member 30 to be welded to the side walls 23 over a range sufficient to provide strength.

The number of welded portions M between the side surface of the body 31 and the side walls 23 is preferably about three to ten. When the number of welded portions M is in this range, the resin accumulations formed by the molten resin allow the hollow structure 10, which is to be mounted to the nacelle 4, to achieve the required strength.

When the body 31 of the mounting member 30 is inserted into the hollow plate 11 while the hollow plate 11 is being thermally fused, the side wall 23 of a cell S may become wound around the mounting member 30 due to its rotation during spin welding. A resin accumulation may form between the side wall 23 and the mounting member 30 when the side wall 23 is wound around the mounting member 30. As the mounting member 30 is inserted, the cell S may have a distorted shape instead of a uniform hexagonal shape.

The flange 33 of the mounting member 30, which is thicker than the second skin layer 25, is welded to the second skin layer 25. Further, the distal surface 31a of the body 31 of the mounting member 30 is flat and is welded to the inner surface of the first skin layer 24 so as not to be exposed from the first skin layer 24 of the hollow plate 11. Thus, the flange 33 is firmly welded to the second skin layer 25, and the distal surface 31a is firmly welded to the first skin layer 24.

The hollow plate 11 is a honeycomb structure in which multiple cells S are arranged. In the hollow structure 10, multiple connection holes 12, which connect the inside and the outside of the cells S to each other, are provided in the main surface 10a facing the air flow passage of the jet engine 1. As a result, the hollow structure 10 absorbs noise generated in the air flow passage of the jet engine 1.

The present embodiment has the following advantages.
(1) The body 31 of the mounting member 30 is not exposed from the main surface 10a of the hollow structure 10, and the head 51a of the countersunk screw 51 of the fixing member 50 is flush with the main surface 10a. Accordingly, when the hollow structure 10 is mounted to the nacelle 4 with the main surface 10a facing the inside of the air flow passage, the surface of the hollow structure 10 that faces the inside of the air flow passage is a flat surface without irregularities. Thus, turbulence of the air in the air flow passage is suppressed.
(2) The side surface of the body 31 of the mounting member 30 is welded to the side wall 23 of the core layer 20 of the hollow plate 11. Accordingly, the mounting member 30 is firmly fixed to the hollow plate 11. This allows the hollow structure 10 to be stably mounted to the inner wall by the fixing member 50.
(3) The distal edge of the body 31 of the mounting member 30 is welded to the inner surface of the first skin layer 24 of the hollow plate 11. Accordingly, the mounting member 30 is more firmly fixed to the hollow plate 11.
(4) The basal end of the body 31 of the mounting member 30 includes the flange 33, which protrudes in the radial direction. The flange 33 is welded to the second skin layer 25 of the hollow plate 11. Accordingly, the mounting member 30 is more firmly fixed to the hollow plate 11.
(5) The body 31 of the mounting member 30 includes the mounting hole 36, which extends in the axial direction. This facilitates insertion of the countersunk screw 51 into the mounting hole 36 and facilitates the mounting of the hollow structure 10.
(6) The body 31 of the mounting member 30 includes the recess 32, which opens in the distal surface 31a. During spin welding, the molten resin of the hollow plate 11 enters the recess 32. Thus, the recess 32 serves as a space to accommodate the molten resin pressed by the body 31, thereby suppressing deformation of the hollow plate 11 around the mounting member 30.
(7) The body 31 of the mounting member 30 has a truncated cone shape in which the diameter becomes slightly smaller toward the distal end. Thus, as compared with a cylindrical body that has a constant diameter, the mounting member 30 is easier to move within the hollow plate 11 during spin welding.
(8) The distal side surface of the flange 33 of the mounting member 30 is formed as the inclined surface 33b, which gradually decreases in diameter toward the distal end. This facilitates the movement of the mounting member 30 within the hollow plate 11.
(9) The diameter L3 of the mounting member 30 at the height-direction center H1 is set to be approximately 1.0 to 1.5 times the distance M1, which is between two facing side walls 23 of the cell S of the core layer 20. Thus, the strength required when the hollow structure 10 is mounted to the nacelle 4 is achieved.
(10) The ratio of the diameter L1 of the body 31 at its basal edge to the diameter L2 of the distal surface 31a of the body 31 (i.e., L1/L2) is set to about greater than 1 and less than or equal to 2. This facilitates the spin welding step and thus enables accurate positioning of the mounting member 30. As a result, firm welding to the side walls 23 of the core layer 20 is enabled, achieving the strength of the hollow structure 10.
(11) The angle formed by the basal surface 33a and the inclined surface 33b of the flange 33 is preferably about 15° to 75°. This facilitates the spin welding step and thus enables accurate positioning of the mounting member 30. As a result, the strength of the hollow structure 10 is achieved.
(12) The hollow plate 11 of the hollow structure 10 includes multiple connection holes 12, which connect the inside and the outside of the cell S to each other. This improves the sound absorbing performance. As a result, the noise generated in the air flow passage of the jet engine 1 is efficiently absorbed.
(13) The hollow structure 10 is a hollow member made of thermoplastic resin. Thus, the hollow structure 10 is lightweight yet has excellent strength. This contributes to weight reduction and durability when the hollow structure 10 is employed in the jet engine 1.
(14) The method for manufacturing the hollow structure 10 includes the welding step, which moves the mounting member 30 from one main surface 11b of the hollow plate 11 toward the other main surface 11a while generating relative rotation between the hollow plate 11 and the mounting member 30. In the welding step, the mounting member 30 is welded inside the hollow plate 11 by frictional heat generated between the hollow plate 11 and the mounting member 30. This allows the mounting member 30 to be firmly fixed to the hollow plate 11 and thus allows the hollow structure 10 to be stably mounted to the nacelle 4.
(15) In the welding step, the mounting member 30 is moved and thermally welded within a range in which the distal end of the mounting member 30 is not exposed from the main surface 11a of the hollow plate 11. Thus, the main surface 10a of the hollow structure 10 is flat. This allows the turbulence of air flow in the jet engine 1 to be suppressed when the main surface 10a of the hollow structure 10 is mounted to face the air passage of the jet engine 1.
(16) In the operating environment of aircraft engine components such as the nacelle 4, when a cut honeycomb structure is exposed, the rigidity of the hollow structure 10 is insufficient. To achieve rigidity, for example, a potting agent may be poured in to close the honeycomb structure. In the hollow structure 10 of the present embodiment, the sheet member 13 is welded to the side surface of the hollow plate 11, thereby sealing the side surface. Thus, the cells S on the side surface of the hollow plate 11 are not exposed. As a result, the strength and rigidity of the hollow structure 10 are improved. In addition, since the sheet member is lightweight, an increase in weight, such as that occurring when filling with a potting agent, is limited.

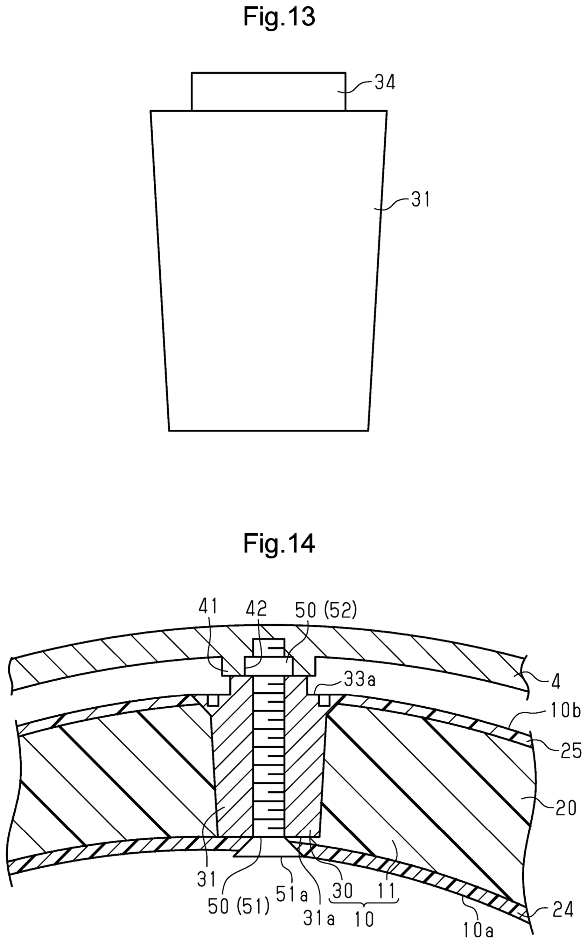

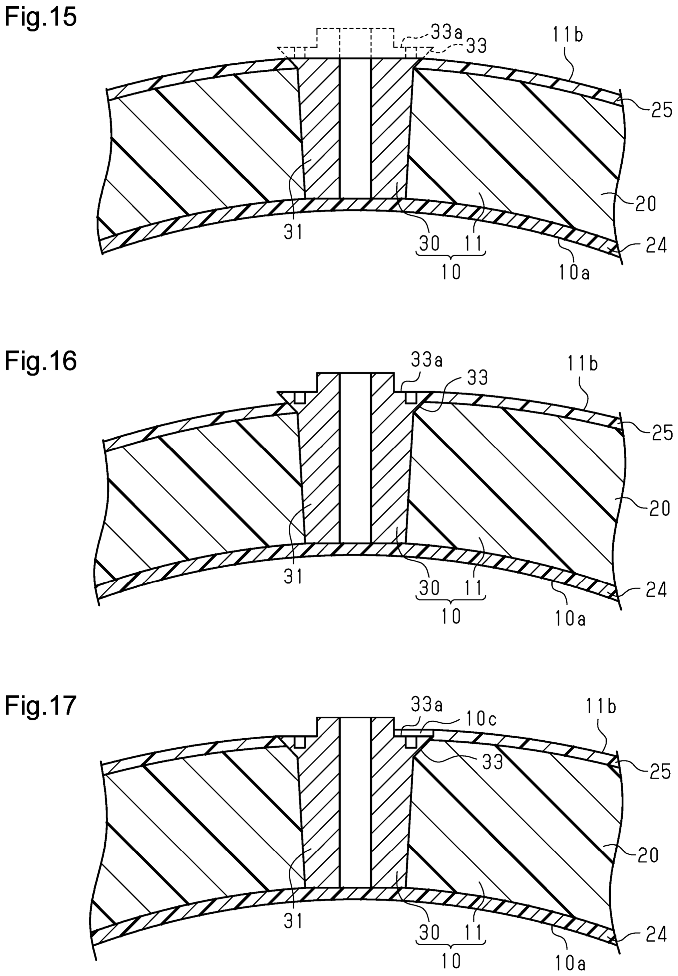

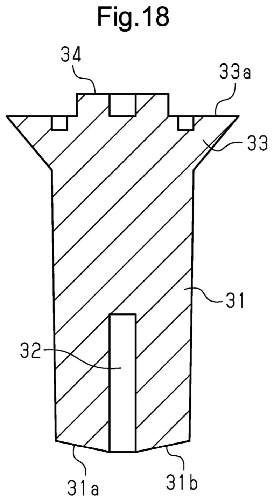

The above-described embodiment may be modified as follows. The above-described embodiment and the following modifications can be combined as long as the combined modifications remain technically consistent with each other.
- As shown in Fig. 12, the mounting member 30 does not have to be welded to the first skin layer 24, as long as the side surface of the body 31 of the mounting member 30 is welded to the side wall 23 of the core layer 20 and the flange 33 is welded to the second skin layer 25. In this case, in the welding step, the mounting member 30 is moved to a position where the distal surface 31a of the mounting member 30 does not come into contact with the first skin layer 24.
- As shown in Fig. 13, the mounting member 30 does not have to include the flange 33.
- The recess 32 does not have to be provided in the mounting member 30 prior to being mounted to the hollow plate 11.
- Instead of the recess 32, a hole may vertically extend through the mounting member 30 prior to being mounted to the hollow plate 11. In this case, in the post-processing step, the mounting hole 36 is formed by inserting a piercing tool having the same diameter as a hole into which molten resin has entered.
- The mounting member 30 does not have to include the head 34.
- The mounting member 30 does not need to have a truncated cone shape. For example, the mounting member 30 may have a cylindrical shape with a constant diameter from the distal end to the basal end. Further, the basal side may be cylindrical and the distal side may be conical.
- The distal end of the mounting member 30 may have any shape. The distal surface 31a does not have to be flat, and may be, for example, semi-spherical.
- As shown in Fig. 5, the distal surface 31a of the mounting member 30 is a flat surface substantially parallel to the basal surface 33a of the flange 33 and the basal surface of the head 34, but is not limited thereto. The distal surface 31a may be inclined with respect to the basal surface 33a of the flange 33 or the basal surface of the head 34. For example, as shown in Fig. 18, the distal surface 31a may be changed to an inclined surface 31b that connects the side surface of the body 31 of the mounting member 30 to the opening of the recess 32.
- The distal corner of the mounting member 30 may be chamfered or rounded. Specifically, the boundary between the side surface of the body 31 of the mounting member 30 and the distal surface 31a may be chamfered or rounded.
- In the drawings of the above-described embodiment, the basal surface of the head 34 of the mounting member 30 is flat. Instead, the center of the basal surface of the head 34 may be recessed toward the distal end. The formation of the recess enables more reliable vacuum fixing by the spin welding machine during the spin welding step. Further, in the post-processing step, which fixes the mounting member 30 to the hollow plate 11 and forms the mounting hole 36 in the mounting member 30, the distal end of the piercing tool is positioned more easily.
- The basal surface 33a of the flange 33 of the mounting member 30 includes four locking holes 35. However, the number of locking holes 35 is not limited thereto. Also, each locking hole 35 may be located at any position as long as it corresponds to the position of the spin welding machine to be used. The locking hole 35 is preferably located, for example, inside the outer diameter of the body 31 of the mounting member 30. When the locking hole 35 is located at such a position, the force from the spin welding machine is readily transmitted to the mounting member 30 during the spin welding step.
- The mounting member 30 subsequent to being mounted to the hollow structure 10 does not have to include the mounting hole 36 that extends in the axial direction through the mounting member 30. In this case, the hollow structure 10 can be mounted to the nacelle 4 by means other than the countersunk screw 51 and the nut 52, such as an adhesive.
- The mounting member 30 subsequent to being mounted to the hollow plate 11 does not have to include the accommodation portion 37. In this case, the hollow structure 10 can be mounted using a screw having a shape different from that of the countersunk screw 51.
- The mounting member 30 mounted to the hollow structure 10 is welded in a state in which the basal surface 33a of the flange 33 is flush with the outer surface of the second skin layer 25. However, the mounting member 30 does not have to be mounted in this state. The basal surface 33a of the flange 33 may protrude from the outer surface of the second skin layer 25, and a step may be provided between the basal surface 33a and the outer surface of the second skin layer 25.
- In the above-described embodiment, the flange 33 of the mounting member 30 is thicker than the second skin layer 25, but may instead be thinner. This allows the entire periphery of the flange 33 to be firmly welded within the thickness of the second skin layer 25.
- The fixing member 50 does not have to include the countersunk screw 51 or the nut 52. For example, the head 34 of the mounting member 30 may include an engagement portion that engages with the mounting seat 41 of the nacelle 4.
- The hollow plate 11 does not have to include the connection holes 12.
- A single connection hole 12 does not have to be formed in every cell S. For example, cells S in which the connection holes 12 are formed and cells S in which the connection holes 12 are not formed may coexist. In this case, among the cells S to which the mounting member 30 is welded, cells S with the connection holes 12 formed and cells S without the connection holes 12 formed may coexist.
- The connection hole 12 does not have to be located at the center of the cell S.
- In the above-described embodiment and the drawings illustrating the embodiment, the hollow structure 10 is flat. However, the hollow structure 10 does not have to be flat. As shown in Fig. 14, the hollow structure 10 may be curved along the shape of the inner surface of the nacelle 4. Instead, part of the hollow structure 10 may be curved.
- In the above-described embodiment, the main surface 10a of the hollow structure 10, which is mounted to the nacelle 4 and faces the air flow passage, is a flat surface from which the mounting member 30 and the fixing member 50 do not protrude. However, for example, when the hollow structure 10 is curved as shown in Fig. 14, the head 51a of the countersunk screw 51 mounted to the mounting member 30 may slightly protrude. In this case, the countersunk screw 51 is permitted to protrude to an extent that does not disturb airflow.
- As shown in Fig. 14, the distal surface 31a of the body 31 of the mounting member 30 may be welded at an inclination to the first skin layer 24 of the hollow plate 11. In this case, the resin accumulation formed on the distal side of the distal surface 31a of the body 31 during spin welding increases as the distance between the distal surface 31a and the first skin layer 24 becomes smaller. Referring to Fig. 14, on the distal surface 31a of the body 31 of the mounting member 30, more resin accumulates on the left side in Fig. 14 than on the right side. This ensures that the mounting member 30 is welded. As a result, even if there is a possibility that even if a low-density resin region is formed between the distal end of the mounting member 30 and the first skin layer 24, the mounting member 30 is firmly welded to the hollow plate 11.
- As shown in Fig. 14, when the distal surface 31a of the body 31 of the mounting member 30 is inclined with respect to the first skin layer 24, it is preferable to use the mounting member 30 having the inclined surface 31b as shown in Fig. 18. In this case, the mounting member 30 is preferably welded in a state in which the inclined surface 31b is parallel to the first skin layer 24.
- In the hollow structure 10 of the above-described embodiment, the basal surface 33a of the flange 33 of the mounting member 30 is flush with the main surface 10b of the hollow plate 11. The mounting position of the mounting member 30 does not have to be positioned in such a manner. As shown in Fig. 15, in the spin welding step, the mounting member 30 may be welded such that the main surface 11b of the hollow plate 11 is aligned with an intermediate position of the flange 33 in the thickness direction. In this case, as indicated by the broken line in Fig. 15, the protrusion from the main surface 11b may be cut along the main surface 11b.
- As shown in Fig. 16, when the hollow structure 10 is curved, the mounting member 30 may be mounted at an inclination to the main surface 11b of the hollow plate 11. For example, on the basal side of the mounting member 30, a part of the basal surface 33a of the flange 33 may be flush with the main surface 11b of the hollow plate 11, and another part may protrude from the main surface 11b of the hollow plate 11.
- As shown in Fig. 17, when the hollow structure 10 is curved, on the basal side of the mounting member 30, a part of the basal surface 33a of the flange 33 may be flush with the main surface 11b of the hollow plate 11, and another part may be located inward from the main surface 11b of the hollow plate 11. In this case, at the part of the basal surface 33a located inward from the main surface 11b, the main surface 10b of the hollow structure 10 is recessed to form a recess 10c.
- The hollow plate 11 is not limited to being formed with the core layer 20 by folding a single first sheet member 100, and the core layer 20 may instead be formed using multiple sheets. For example, the core layer 20 may be formed by bending belt-shaped sheets at predetermined intervals and arranging the bent belt-shaped sheets.
- The core layer 20 of the hollow plate 11 does not have to be formed by folding or bending a sheet. Instead, a honeycomb structure formed only by the side walls 23 may be formed through injection molding.
- The core layer 20 may be provided without at least one of the upper wall 21 and the lower wall 22.
- In the core layer 20, hexagonal prismatic cells S are defined. However, the shape of each cell S is not particularly limited, and may be, for example, a polygonal prism (e.g., a rectangular prism or an octagonal prism) or a cylinder. In this case, the cells having different shapes may be mixed. The cells do not have to be adjacent to each other, and a gap (space) may be provided between the cells.
- The hollow plate 11 may be configured such that, for example, the core layer 20 is formed by providing multiple hollow cylindrical cells protruding from a sheet body toward one side and the first skin layer 24 and the second skin layer 25 are joined to the top surfaces of the hollow cylindrical cells in the core layer 20. Alternatively, the core layer 20 may be formed by joining sheets provided with multiple hollow cylindrical cells such that the top surfaces of the hollow cylindrical cells are joined to each other. In this case, in at least one of the sheets including multiple hollow cylindrical cells, the first skin layer 24 and the second skin layer 25 are joined to the surface of a sheet on which no hollow cylindrical cell is formed. The hollow cylindrical shape is not limited to a shape in which the diameter is constant in the height direction, and includes a tapered hollow cylindrical shape (i.e., a truncated conical shape) in which the diameter decreases toward the top surface.
- The first skin layer 24 and the second skin layer 25 may be formed not as a single layer but as a laminate having two or more layers. For example, a resin layer other than a polyamide resin (e.g., an acrylic layer) may be formed on the outer surface of the first skin layer 24 to improve scratch resistance or impact resistance. Such a layer structure may be different between the first skin layer 24 and the second skin layer 25.
- In the above-described embodiment, the thickness of the first sheet member 100 used to form the core layer 20 and the thickness of the second sheet member used to form the first skin layer 24 and the second skin layer 25 are not particularly limited. It is preferable that the thicknesses of these layers be in the relationship: first skin layer 24 > second skin layer 25 > first sheet member 100.

When the first skin layer 24 and the second skin layer 25 are thicker than the first sheet member 100, the rigidity of the opposite surfaces of the hollow structure 10 is improved, and thus the rigidity of the entire hollow structure 10 is improved.

In addition, when the first skin layer 24 is thicker than the second skin layer 25, the impact strength of the portion of the hollow structure 10 facing the inside of the air flow passage of the jet engine 1 is achieved. Further, insertion of the mounting member 30 during the spin welding step is facilitated. During the spin welding step, the mounting member 30 is less likely to be exposed to the outside of the first skin layer 24, making it easier for the surface of the first skin layer 24 to remain flat.
- In the hollow structure 10, the sheet member 13 is welded to the side surface of the hollow plate 11, thereby sealing the side surface. However, this configuration does not have to be employed. Instead, for example, if the inside of the cell S is drained, part of the side surface does not have to be sealed. Further, the side surface may be sealed and then a drain hole may be formed in the side surface.
- In the method for manufacturing the hollow structure 10, prior to the welding step, a recess or a hole used to mount the mounting member 30 may be formed in part of the hollow plate 11 to which the mounting member 30 is mounted. The recess or hole is smaller in diameter than the body 31 of the mounting member 30. This also allows frictional heat to be generated between the hollow plate 11 and the mounting member 30 during spin welding.
- In the post-processing step of the method for manufacturing the hollow structure 10, the mounting hole 36 is formed by inserting a piercing tool having the same diameter as the recess 32 into the recess 32 filled with molten resin from the distal surface 31a of the body 31 of the mounting member 30. Instead of the piercing tool having the same diameter as that of the recess 32, a piercing tool having a diameter larger than the recess 32 may be used to form the mounting hole 36. In this case, since the mounting hole 36 has a larger diameter than the recess 32, resin residue resulting from molten resin having entered the recess 32 is less likely to be generated when, for example, the countersunk screw 51 is fixed.

### REFERENCE SIGNS LIST

S, S1, S2...Cell
4...Nacelle (Inner Wall of Jet Engine)
10...Hollow Structure
11...Hollow Plate
20... Core Layer
23...Side Wall
24...First Skin Layer
25...Second Skin Layer
30...Mounting Member
31...Body
33...Flange
36...Mounting Hole

## Claims

1. A hollow structure configured to be securely mounted to an inner wall of a jet engine for an aircraft, the inner wall being a mounting target, the hollow structure comprising:
a hollow plate made of thermoplastic resin in which cells are arranged; and
a mounting member configured to be securely mounted to the inner wall, wherein
the hollow plate includes:
a core layer having multiple side walls that extend in a thickness direction of the hollow plate to define the cells;
a first skin layer laminated on a first main surface of the core layer; and
a second skin layer laminated on a second main surface of the core layer,
the mounting member includes a columnar body extending in the thickness direction of the hollow plate,
a side surface of the body is welded to the side walls of the core layer, and
the body is not exposed from an outer surface of the first skin layer.

2. The hollow structure according to claim 1, wherein
the body includes an edge welded to an inner surface of the first skin layer.

3. The hollow structure according to claim 1, wherein
the body includes an end having a flange, the flange protruding in a radial direction, and
the flange is welded to the second skin layer.

4. The hollow structure according to any one of claims 1 to 3, wherein
the body includes a mounting hole extending in an axial direction.

5. A method for manufacturing a hollow structure including a hollow plate made of thermoplastic resin in which cells are arranged and a columnar mounting member configured to be securely mounted to an inner wall of a jet engine, the method comprising:
a welding step that welds the mounting member inside the hollow plate by frictional heat generated between the hollow plate and the mounting member by moving the mounting member from a first main surface toward a second main surface of the hollow plate while generating relative rotation between the hollow plate and the mounting member, wherein
in the welding step, the mounting member is moved within a range in which the mounting member is not exposed from the second main surface.
